# EUROPEAN PATENT SPECIFICATION

(11) **EP 4 084 511 B1**
(45) Date of publication and mention of the grant of the patent: **16.07.2025**
(21) Application number: 20904528.5
(22) Date of filing: 25.12.2020
(51) Int. Cl.: H04W 4/80, G06F 13/14, G06F 9/54

(54) **APPLICATION SHARING METHOD, FIRST ELECTRONIC DEVICE, AND COMPUTER-READABLE STORAGE MEDIUM**
ANWENDUNGSTEILUNGSVERFAHREN, ERSTE ELEKTRONISCHE VORRICHTUNG UND COMPUTERLESBARES SPEICHERMEDIUM
PROCÉDÉ DE PARTAGE D'APPLICATION, PREMIER DISPOSITIF ÉLECTRONIQUE ET SUPPORT DE STOCKAGE LISIBLE PAR ORDINATEUR

(30) Priority: 26.12.2019 CN 201911364993
(43) Date of publication of application: 02.11.2022
(73) Proprietor: Vivo Mobile Communication Co., Ltd., Dongguan, Guangdong 523863 (CN)
(72) Inventor: LUO, Bin, Dongguan, Guangdong 523863 (CN)
(74) Representative: Conti, Marco
(86) International application number: PCT/CN2020/139195
(87) International publication number: WO 2021/129771

(56) References cited:
- EP-A1- 3 304 942
- WO-A1-2011/054075
- CN-A- 104 850 463
- CN-A- 106 227 567
- CN-A- 111 163 449
- US-A- 5 758 110
- US-A1- 2011 131 479
- US-A1- 2013 263 021
- US-A1- 2015 120 817
- US-A1- 2016 062 875

## Description

### TECHNICAL FIELD

The present invention relates to the field of communications technologies, and in particular, to an application sharing method, a first electronic device, and a computer-readable storage medium.

### BACKGROUND

With the rapid development of computer technologies, functions of electronic devices are becoming richer, and a demand for function sharing between different electronic devices is increasing. For example, application sharing is a common sharing demand.

Currently, the most common way of sharing an application between electronic devices is sharing a source file of the application. A receiving end uses the application after receiving the source file and performing installation. In an application sharing process, a user needs to first find, in an electronic device, a source file of an application that needs to be shared, and then share the source file to a receiving end. Generally, the source file is relatively large; and transmission of the source file is relatively time-consuming during sharing of the source file to the receiving end. As a result, sharing efficiency is relatively low.

US20150120817A1 discloses a control method of a host electronic device communicating with a client electronic device.

### SUMMARY

The invention is set out in the appended set of claims. Embodiments of the present invention provide an application sharing method, a first electronic device, a computer-readable storage medium, and a computer program product, as defined in accompanying claims, to resolve a problem that device utilization is low in an application sharing process in the prior art.

In other words, the running interface of the first target application of the first electronic device can be shared with the second electronic device only by selecting the first target application identifier from the first interface and then sending the running interface of the corresponding first target application to the second electronic device, without transmitting a source file. Therefore, the sharing speed of the first target application is increased, thereby improving the sharing efficiency.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a first flowchart of an application sharing method according to an embodiment of the present invention;
FIG. 2 is a first interface diagram of a first electronic device according to an embodiment of the present invention;
FIG. 3 is a second interface diagram of a first electronic device according to an embodiment of the present invention;
FIG. 4 is a third interface diagram of a first electronic device according to an embodiment of the present invention;
FIG. 5 is a fourth interface diagram of a first electronic device according to an embodiment of the present invention;
FIG. 6 is a fifth interface diagram of a first electronic device according to an embodiment of the present invention;
FIG. 7 is a sixth interface diagram of a first electronic device according to an embodiment of the present invention;
FIG. 8 is a seventh interface diagram of a first electronic device according to an embodiment of the present invention;
FIG. 9 is an eighth interface diagram of a first electronic device according to an embodiment of the present invention;
FIG. 10 is a ninth interface diagram of a first electronic device according to an embodiment of the present invention;
FIG. 11 is a tenth interface diagram of a first electronic device according to an embodiment of the present invention;
FIG. 12 is a first schematic diagram of an electronic device according to an embodiment of the present invention; and
FIG. 13 is a schematic diagram of a hardware structure of an electronic device according to an embodiment of the present invention.

### DETAILED DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

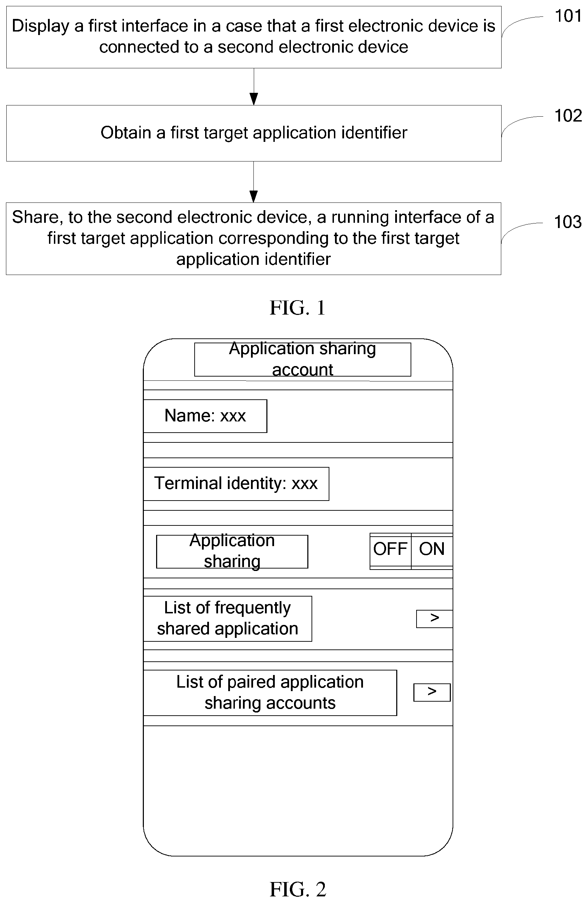

Referring to FIG. 1, an embodiment provides an application sharing method, applied to a first electronic device and including the following steps.

Step 101: Display a first interface in a case that the first electronic device is connected to a second electronic device.

The first interface includes an application identifier corresponding to an application that has been shared by the first electronic device to the second electronic device before current connection between the first electronic device and the second electronic device.

In a process of sharing the application between the first electronic device and the second electronic device, after the first electronic device is connected to the second electronic device, the first interface may be displayed in the first electronic device. Because the first interface may include the application identifier corresponding to the application that has been shared by the first electronic device to the second electronic device, a user can select, from the application identifier, in the first interface, corresponding to the application that has been shared by the first electronic device to the second electronic device, an application identifier corresponding to an application that needs to be shared.

Step 102: Obtain a first target application identifier.

The application identifier corresponding to the application that has been shared by the first electronic device to the second electronic device includes the first target application identifier, or the first target application identifier is an application identifier input in the first interface. That the application identifier corresponding to the application that needs to be shared by the user is included by the application identifier corresponding to the application that has been shared by the first electronic device to the second electronic device indicates that: the first electronic device has shared the application to the second electronic device. In this case, the user only needs to select the application identifier of the application from the application identifier corresponding to the application that has been shared by the first electronic device to the second electronic device, that is, select the first target application identifier from the application identifier corresponding to the application that has been shared by the first electronic device to the second electronic device. That the identifier of the application that needs to be shared by the user is not included by the application identifier corresponding to the application that has been shared by the first electronic device to the second electronic device indicates that: the first electronic device has not shared the application to the second electronic device. In this case, the first electronic device can obtain the first target application identifier by inputting, in the first interface, the identifier of the application that needs to be shared, that is, inputting the first target application identifier.

Step 103: Share, to the second electronic device, a running interface of a first target application corresponding to the first target application identifier.

After the first target application identifier is obtained, the running interface of the first target application corresponding to the first target application identifier is shared to the second electronic device, thereby realizing sharing of the first target application. In an example, the running interface of the first target application may be displayed before the running interface of the first target application corresponding to the first target application identifier is shared to the second electronic device. In other words, after the first target application identifier is obtained, the first target application may be first run in a foreground, thereby displaying the running interface of the first target application; and then the running interface of the first target application may be shared to the second electronic device. Optionally, the running interface of the first target application is displayed in a virtual screen of the first electronic device; screen recording is performed on content displayed in the virtual screen; and a screen recording result is sent to the second electronic device. In this way, the user can still perform another operation of the first electronic device.

According to the application sharing method in the embodiments of the present invention, the first electronic device may display the first interface. The first interface includes the application identifier corresponding to the application that has been shared by the first electronic device to the second electronic device before the current connection between the first electronic device and the second electronic device. The first electronic device may share, to the second electronic device, the running interface of the first target application corresponding to the first target application identifier. The application identifier corresponding to the application that has been shared by the first electronic device to the second electronic device includes the first target application identifier, or the first target application identifier is the application identifier input in the first interface. In the sharing process in the embodiments of the present invention, the first target application identifier may be one of the application identifier corresponding to the application that has been shared by the first electronic device to the second electronic device, or an application identifier input in the first interface. In other words, the running interface of the first target application of the first electronic device can be shared with the second electronic device only by selecting the first target application identifier from the first interface and then sending the running interface of the corresponding first target application to the second electronic device, without transmitting a source file. Therefore, the sharing speed of the first target application is increased, thereby improving the sharing efficiency.

In addition, in the sharing process in this embodiment of the present invention, the first electronic device only needs to send the running interface to the second electronic device, without being controlled by another electronic device; and the user can still perform another operation on the first electronic device, for example, a related operation on another application or another function operation. An operation performed by the user on the first electronic device is not affected by sharing of a target application. Therefore, utilization of the first electronic device can be improved.

In an example, each of the first electronic device and the second electronic device may be, but not limited to a mobile phone, a tablet personal computer (Tablet Personal Computer), a laptop computer (Laptop Computer), a personal digital assistant (personal digital assistant, PDA), a mobile Internet device (Mobile Internet Device, MID), or a wearable device (Wearable Device).

In an example, after the obtaining a first target application identifier, and before the sharing, to the second electronic device, a running interface of a first target application corresponding to the first target application identifier, the method further includes: enabling the first target application corresponding to the first target application identifier.

In other words, after the first electronic device obtains the first target application identifier, the first target application corresponding to the first electronic device has not been enabled. In this case, the user needs to: first start, in the first electronic device, the first target application corresponding to the first target application identifier, where after the first target application is enabled, the running interface of the first target application can be displayed; and then share the running interface of the first target application to the second electronic device, thereby realizing sharing of the first target application.

In an embodiment, the first interface further includes a first input box.

The obtaining a first target application identifier includes: receiving the first target application identifier input in the first input box.

After the obtaining a first target application identifier, the method further includes: displaying the first target application identifier in the first interface, and hiding a first application identifier in the application identifier corresponding to the application that has been shared by the first electronic device to the second electronic device, where the first application identifier is an application identifier that is different from the first target application identifier and that is in the application identifier corresponding to the application that has been shared by the first electronic device to the second electronic device.

In other words, in this embodiment, the first target application identifier can be input by using the first input box, to obtain the first target application identifier. For example, in a case that the application identifier corresponding to the application that has been shared by the first electronic device to the second electronic device does not include the first target application identifier, that is, the identifier of the application that needs to be shared by the user is not included by the application identifier corresponding to the application that has been shared by the first electronic device to the second electronic device, the user can input the first target application identifier in the first input box, to obtain the first target application identifier. For another example, in a case that there are a large quantity of application identifiers corresponding to applications that have been shared by the first electronic device to the second electronic device, it is time-consuming for the user to search for the identifier of the application that needs to be shared. In this case, the identifier of the application that needs to be shared, namely, the first target application identifier, can be input by using the first input box. Subsequently, only the first target application identifier is displayed, and other identifiers are hidden. In this way, the user can search for and view the first target application identifier.

In an embodiment, the displaying a first interface in a case that the first electronic device is connected to a second electronic device includes: receiving a first input in the case that the first electronic device is connected to the second electronic device; displaying a second interface in response to the first input, where the second interface includes a device identifier of at least one third electronic device that has been connected to the first electronic device, and the device identifier of the at least one third electronic device includes a device identifier of the second electronic device; and receiving a second input for the device identifier that is of the second electronic device and that is in the second interface, and displaying the first interface.

In other words, the second interface is displayed only when the first electronic device receives the first input. Then, the second input is performed for the device identifier that is of the second electronic device and that is in the second interface; and the first interface is displayed in response to the second input. It may be understood that, the user may: first enter the second interface in which the device identifier of the at least one third electronic device is displayed, where a currently connected electronic device is the second electronic device; select the device identifier of the second electronic device from the device identifier of the at least one third electronic device, thereby entering the first interface that includes the application identifier corresponding to the application that has been shared by the first electronic device to the second electronic device; and then select the first target application identifier. In this way, the user can be helped to select a device identifier from the device identifier of the at least one third electronic device and enter the first interface related to the selected second electronic device.

In an embodiment, the enabling the first target application corresponding to the first target application identifier may include: receiving a first operation for the first target application identifier; and enabling the first target application corresponding to the first target application identifier in response to the first operation.

In other words, the first operation, namely, selecting the first target application identifier, may be performed on the first target application identifier in a first application identifier list; and in response to the first operation, not only can the first target application identifier be obtained, but also the first target application can be enabled. Alternatively, the first target application identifier input in the first input box is received to obtain the first target application identifier; the first target application identifier is displayed in the first interface; and a first application identifier in the application identifier corresponding to the application that has been shared by the first electronic device to the second electronic device has been hidden. The first operation is performed on the displayed first target application identifier; and the first target application can be enabled in response to the first operation.

In an embodiment, the method further includes: displaying a third interface in the case that the first electronic device is connected to the second electronic device, where the third interface includes an application identifier corresponding to a shared application and having been received by the first electronic device before the current connection between the first electronic device and the second electronic device; sending, to the second electronic device, a sharing request for a second target application corresponding to a second target application identifier, where the application identifier corresponding to the shared application and having been received by the first electronic device includes the second target application identifier or the second target application identifier is an application identifier input in the third interface; and receiving and displaying a running interface that is of the second target application and that is sent by the second electronic device based on the sharing request.

In this embodiment, the first electronic device, as a receiving end, receives application sharing. In the foregoing process, the user may select, from the application identifier corresponding to the shared application and having been received by the first electronic device, an application identifier corresponding to an application that needs to be requested for sharing from the second electronic device this time; or may input, in the second interface, the identifier of the application that needs to be requested for sharing from the second electronic device this time, thereby determining the application that needs to be requested for sharing this time. The application identifier corresponding to the shared application and having been received by the first electronic device is recorded in the first electronic device. This may be understood as: the first electronic device may include an application identifier that corresponds to an application and that is received by the another electronic device. The another electronic device may be understood as any electronic device different from the first electronic device, and may include the second electronic device. In a case that the identifier of the application that needs to be requested for sharing this time is included by the application identifier corresponding to the shared application and having been received by the first electronic device, the user only needs to select the identifier of the application that needs to be requested for sharing (namely, the second target application identifier) from the application identifier corresponding to the shared application, having been received by the first electronic device, and displayed in the third interface. In a case that the identifier of the application that needs to be requested for sharing is not included by the application identifier corresponding to the shared application and having been received by the first electronic device, the identifier of the application that needs to be requested for sharing, namely, the second target application identifier, can be input in the third interface.

The first electronic device actively requests application sharing from the second electronic device. The second electronic device passively performs sharing in a case that the sharing request is received. The sharing request is a sharing request for the second target application, namely, a request for sharing of the second target application.

After receiving the sharing request sent by the first electronic device for the second target application, the second electronic device shares the running interface of the target application to the first electronic device in response to the sharing request. In this way, the first electronic device receives and displays a running interface that is of the second target application and that is sent by the second electronic device based on the sharing request. In other words, the running interface that is of the second target application and that is received by the first electronic device is the running interface that is of the second target application and that is shared to the first electronic device by the second electronic device in response to the sharing request after the second electronic device receives the sharing request sent by the first electronic device for the second target application.

In an embodiment, the third interface further includes a second input box.

The sending, to the second electronic device, a sharing request for a second target application corresponding to a second target application identifier includes: receiving the second target application identifier input in the second input box; displaying the second target application identifier in the third interface, and hiding a second application identifier in the application identifier corresponding to the shared application and having been received by the first electronic device, where the second application identifier is an application identifier that is different from the second target application identifier and that is in the application identifier corresponding to the shared application and having been received by the first electronic device; and sending, to the second electronic device, the sharing request for the second target application corresponding to the second target application identifier.

In other words, in this embodiment, the second target application identifier can be input by using the second input box, to obtain the second target application identifier, thereby sending the sharing request for the second target application corresponding to the second target application identifier. For example, in a case that the application identifier corresponding to the shared application and having been received by the first electronic device does not include the second target application identifier, that is, the identifier of the application that needs to be requested by the user for sharing is not included by the application identifier corresponding to the shared application and having been received by the first electronic device, the user can input the second target application identifier in the second input box, thereby obtaining the second target application identifier. For another example, in a case that there are a large quantity of application identifiers corresponding to the shared application and having been received by the first electronic device, it is time-consuming for the user to search for the identifier of the application that needs to be requested for sharing. In this case, the identifier of the application that needs to be shared, namely, the second target application identifier, can be input by using the second input box. Subsequently, only the second target application identifier is displayed, and other identifiers are hidden. In this way, the user can search for the second target application identifier and request for sharing of the second target application.

In an embodiment, the displaying a third interface in the case that the first electronic device is connected to the second electronic device includes: receiving a third input in the case that the first electronic device is connected to the second electronic device; and displaying the third interface in response to the third input.

In other words, the third interface can be displayed only when the first electronic device receives the third input. The user can select the second target application identifier from the application identifier corresponding to the shared application and having been received by the first electronic device. However, the second interface can be displayed only when the first input is received; and the first interface can be displayed only when the second input is received. In this way, the third interface can be separately displayed from the first interface.

In an embodiment, before the displaying a first interface or the displaying a third interface, the method further includes: displaying a first prompt box in the case that the first electronic device is connected to the second electronic device. The first input is a first input for the first prompt box. The second input is a second input for the first prompt box.

It may be understood that, performing the first input in the first prompt box indicates that the first electronic device, as a sharing end, shares an application. In this case, the second interface is displayed. The user enters the first interface by selecting the device identifier of the second electronic device from the device identifier that is of the at least one third electronic device and that is in the second interface. Then, the user selects, from the application identifier corresponding to the application that have been shared by the first electronic device in the first interface to the second electronic device, the identifier of the application that needs to be requested for sharing; or inputs, in the first interface, the identifier of the application that needs to be requested for sharing. Performing the third input in the first prompt box indicates that the first electronic device, as a receiving end, receives a shared application. This may be understood as that the third interface is displayed when application sharing is requested. The user selects, from the application identifier corresponding to the shared application and having been received by the first electronic device in the third interface, the identifier of the application that needs to be requested for sharing; or inputs, in the third interface, the identifier of the application that needs to be requested for sharing.

In an embodiment, the sending, to the second electronic device, a sharing request for a second target application corresponding to a second target application identifier may include: receiving a fourth input for the second target application identifier; and sending, to the second electronic device in response to the fourth input, the sharing request for the second target application corresponding to the second target application identifier.

In other words, the fourth input can be performed on the second target application identifier in the application identifier corresponding to the shared application and having been received by the first electronic device, that is, the second target application identifier can be selected. The sharing request for the second target application corresponding to the second target application identifier can be sent to the second electronic device in response to the fourth input. Alternatively, when the second target application identifier input in the second input box is received, and the second application identifier is displayed in the third interface, the second application identifier in the application identifier corresponding to the shared application and having been received by the first electronic device has been hidden. In this case, the fourth input is performed on the displayed second target application identifier. The sharing request for the second target application corresponding to the second target application identifier can be sent to the second electronic device in response to the fourth input.

The foregoing application sharing process is described specifically below with one specific embodiment, that is, described by using an example in which the first electronic device is device A, the first target application is application 1, the second electronic device is device B, and the second target application is application a1.

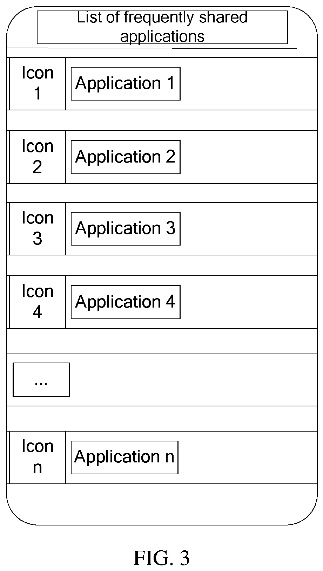

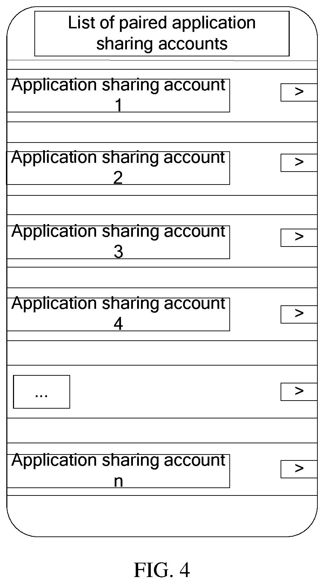

One electronic device corresponds to one application sharing account. An application sharing account identifier corresponding to an electronic device is used as a device identifier of the electronic device. For example, an application sharing account corresponding to the first electronic device may be account A; an application sharing account corresponding to the second electronic device may be application sharing account 1; and one application sharing account may include an account name (which may be used as an application sharing account identifier), an identity of a corresponding electronic device (as shown in FIG. 2), a list of frequently shared application identifiers (that is, the user can enter, by clicking an entrance for a list of frequently shared applications in FIG. 2, an identifier, as shown in FIG. 3, that is of an application and that is received by an electronic device corresponding to the application sharing account and used as the receiving end), and a list of paired application sharing accounts (namely, an account of an application shared to device A by the electronic device corresponding to the application sharing account and used as the sharing end, where a correspondence may be one to many, that is, the user may enter, by clicking an entrance that is for the list of paired application sharing accounts and that is in FIG. 2, applications that have been shared to device A by electronic devices corresponding to a plurality of application sharing accounts and that are shown in FIG. 4). The list of frequently shared application identifiers includes an identifier that is of an application and that has been received from another device by the device A as the receiving end.

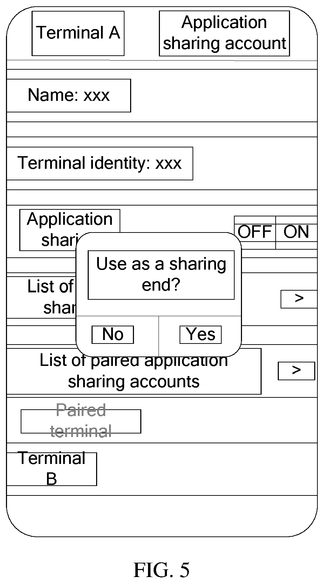

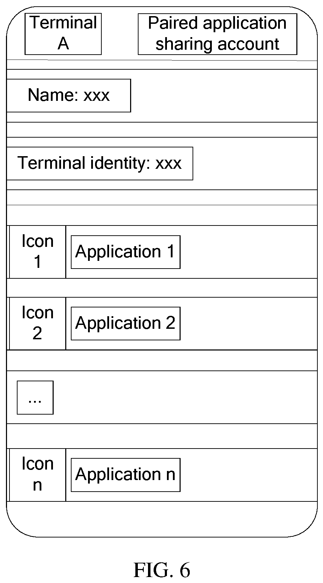

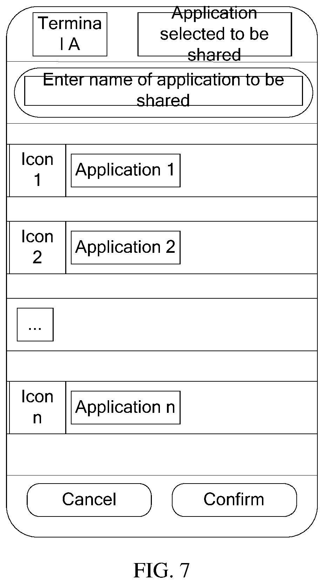

First, application sharing switches on device A and device B are turned on, to search for a neighboring electronic device. Device A and device B are connected. After device A and device B are connected successfully, pop-ups (namely, the first prompt box) are popped up on device A and device B for a user to determine whether to use the electronic device as a sharing electronic device, as shown in FIG. 5. If the user selects "Yes" on device A, device A is used as the sharing end, and jumps to the second interface, as shown in FIG. 4. Then, device B enters the first interface when the user selects an application account identifier that corresponds to device B and that is in FIG. 4. As shown in FIG. 6, the first interface includes a first application identifier list. The first application identifier list includes the application identifier corresponding to the application that has been shared by the first electronic device to the second electronic device, namely, an application identifier corresponding to an application that has been shared by device A to device B. The user can select, from the first application identifier list, the identifier of the application that needs to be requested for sharing. For example, when application 1 needs to be shared, the user only needs to click application 1. In a case that the identifier of the application that needs to be shared is not included by the first application identifier list, the user can invoke a first input box by performing an operation in the first interface, that is, the first input box is displayed in the first interface, as shown in FIG. 7. The user can input, in the input box, the identifier of the application that needs to be shared.

In a case that a first target application identifier of a first target application shared by device A is not included by the first application identifier list, after the first target application is shared, the first target application identifier may be recorded in device B and added to the first application identifier list.

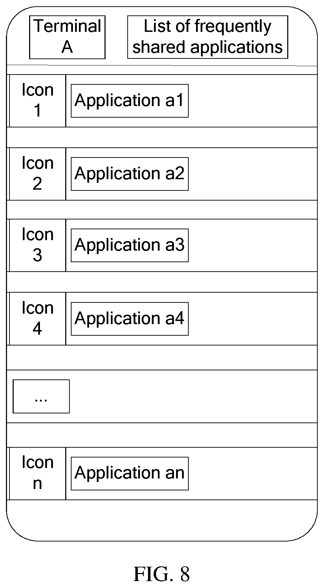

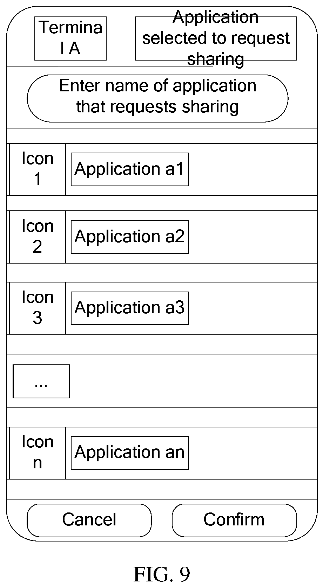

If "No" is selected in FIG. 5, device A is used as the receiving end and jumps to the third interface. As shown in FIG. 8, the third interface includes a second application identifier list. The second application identifier list includes the application identifier corresponding to the shared application and having been received by the first electronic device, namely, the list of frequently shared applications in this figure. The user can select, from the second application identifier list, the identifier of the application that needs to be requested for sharing. For example, when application a1 needs to be shared, the user only needs to click application a1, and then send a sharing request for application a1 to device B. In a case that the identifier of the application that needs to be requested for sharing is not included by the second application identifier list, the user can invoke a second input box by performing an operation in the second interface, that is, the second input box is displayed in the second interface, as shown in FIG. 9. The user can input, in the input box, the identifier of the application that needs to be requested for sharing.

In a case that the second target application identifier of the second target application that is requested for sharing by device A is not included by the second application identifier list. After device A implements receiving of application sharing on a running interface that requests device A to share the second target application, the second target application identifier may be added to the second application identifier list of device A.

Device A may sequentially enter an interface of an application selected to be shared (namely, the first interface) and an interface of an application selected to request sharing (namely, the third interface). If "Cancel" is selected, an application sharing operation is terminated. If "Confirm" is selected, the application sharing operation is performed. Before clicking the "Confirm" button, the user may select, from an application list in an upper part of an interface, an application that has been shared or that is requested for sharing; or input, in an input box, a name of the application that has been shared or that is requested for sharing. After the user clicks the "Confirm" button, device A and device B perform application sharing by using bluetooth, WiFi, near-field communication, or network communication, thereby implementing real-time sharing of an application.

In addition, the first application identifier list is a list in which identifiers are sequenced in descending order of sharing times; and the second application identifier list is a list in which identifiers are sequenced in descending order of requesting times of sharing. In this case, convenience is brought for the user to search for an application having a relatively large quantity of sharing times and a relatively large quantity of requesting times of sharing.

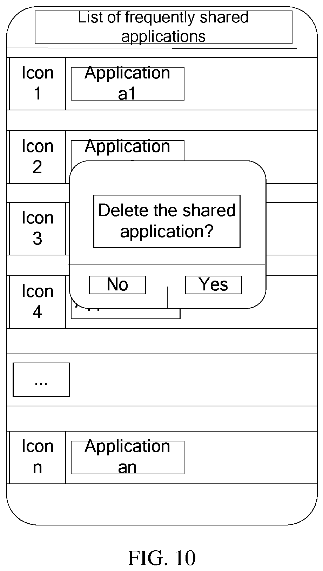

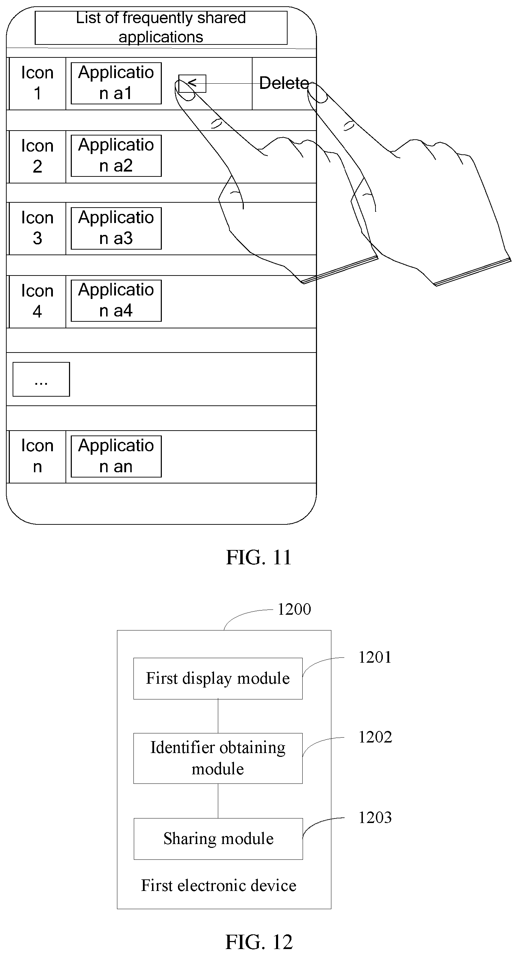

In addition, the user may further delete the third target application identifier from the second application identifier list. As shown in FIG. 10, the user may long press a display position of the third target application identifier (for example, application 1), so that a deletion prompt box is popped up. If the user selects "Yes", that is, determines to delete the third target application identifier, the third target application identifier is deleted. If the user selects "No", deletion is canceled. As shown in FIG. 11, the user may alternatively perform a sliding operation on the display position of the third target application identifier, to invoke a deletion button. The user can delete the third target application identifier by performing an operation, for example, clicking, on the deletion button. In this way, a quantity of application identifiers in the first application identifier list can be adjusted at any time, thereby reducing a phenomenon that because the quantity is relatively large, difficulty is brought for a user searching for an application identifier.

Referring to FIG. 12, an embodiment of the present invention further provides a first electronic device 1200, including:
a first display module 1201, configured to display a first interface in a case that the first electronic device is connected to a second electronic device, where the first interface includes an application identifier corresponding to an application that has been shared by the first electronic device to the second electronic device before current connection between the first electronic device and the second electronic device;
an identifier obtaining module 1202, configured to obtain a first target application identifier, where a first application identifier list includes the first target application identifier, or the first target application identifier is an application identifier input in the first interface; and
a sharing module 1203, configured to share, to the second electronic device, a running interface of a first target application corresponding to the first target application identifier.

In an embodiment, the first interface further includes a first input box.

The identifier obtaining module is configured to receive the first target application identifier input in the first input box.

The first electronic device further includes:
a first hiding module, configured to: after the identifier obtaining module obtains the first target application identifier, display the first target application identifier in the first interface, and hide a first application identifier in the application identifier corresponding to the application that has been shared by the first electronic device to the second electronic device, where the first application identifier is an application identifier that is different from the first target application identifier and that is in the application identifier corresponding to the application that has been shared by the first electronic device to the second electronic device.

In an embodiment invention, the first display module includes:
a first input receiving module, configured to receive a first input in the case that the first electronic device is connected to the second electronic device;
a first displaying sub-module, configured to display a second interface in response to the first input, where the second interface includes a device identifier of at least one third electronic device that has been connected to the first electronic device, and the device identifier of the at least one third electronic device includes a device identifier of the second electronic device; and
a second displaying sub-module, configured to receive a second input for the device identifier that is of the second electronic device and that is in the second interface, and display the first interface.

In one embodiment, the first electronic device further includes:
a second display module, configured to display a third interface in the case that the first electronic device is connected to the second electronic device, where the third interface includes an application identifier corresponding to a shared application and having been received by the first electronic device before the current connection between the first electronic device and the second electronic device;
a request sending module, configured to send, to the second electronic device, a sharing request for a second target application corresponding to a second target application identifier, where the application identifier corresponding to the shared application and having been received by the first electronic device includes the second target application identifier or the second target application identifier is an application identifier input in the third interface; and
an interface receiving module, configured to receive and display a running interface that is of the second target application and that is sent by the second electronic device based on the sharing request.

In an embodiment, the third interface further includes a second input box.

The request sending module includes:
an identifier receiving module, configured to receive the second target application identifier input in the second input box;
a second hiding module, configured to: display the second target application identifier in the third interface, and hide a second application identifier in the application identifier corresponding to the shared application and having been received by the first electronic device, where the second application identifier is an application identifier that is different from the second target application identifier and that is in the application identifier corresponding to the shared application and having been received by the first electronic device; and
a sharing request sending module, configured to send, to the second electronic device, the sharing request for the second target application corresponding to the second target application identifier.

The technical features of the electronic device in this embodiment of the present invention correspond to those of the foregoing application sharing method applied to the second electronic device. All processes of the foregoing application sharing method are implemented by using the electronic device, and a same effect can be achieved. To avoid repetition, details are not described herein again.

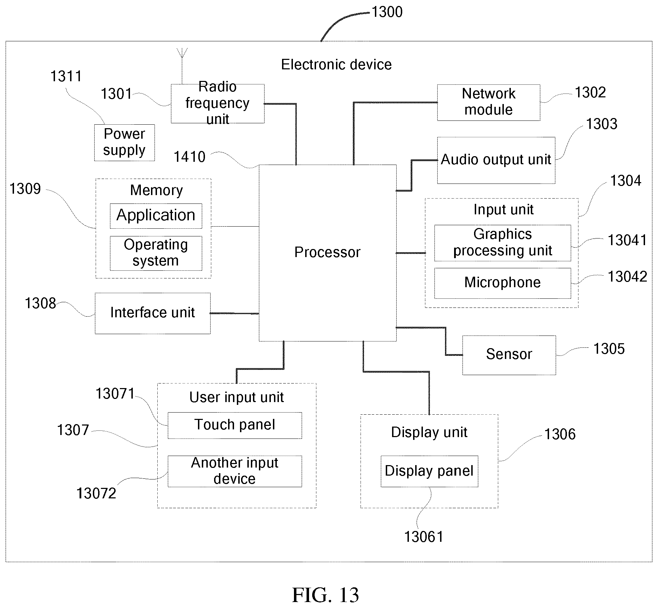

FIG. 13 is a schematic structural diagram of hardware of an electronic device implementing the embodiments of the present invention. The electronic device 1300 includes but is not limited to: a radio frequency unit 1301, a network module 1302, an audio output unit 1303, an input unit 1304, a sensor 1305, a display unit 1306, a user input unit 1307, an interface unit 1308, a memory 1309, a processor 1310, a power supply 1311, and other components. A person skilled in the art may understand that a structure of the electronic device shown in FIG. 13 constitutes no limitation on the electronic device, and the electronic device may include more or fewer components than those shown in the figure, or have a combination some components, or have a different component arrangement. In this embodiment of the present invention, the electronic device includes, but is not limited to, a mobile phone, a tablet computer, a notebook computer, a palmtop computer, an in-vehicle mobile terminal, a wearable device, and a pedometer.

The display unit 1306 is configured to display a first interface in a case that the first electronic device is connected to a second electronic device, where the first interface includes an application identifier corresponding to an application that has been shared by the first electronic device to the second electronic device before current connection between the first electronic device and the second electronic device. The processor 1310 is configured to obtain a first target application identifier. The radio frequency unit 1301 is configured to share, to the second electronic device, a running interface of a first target application corresponding to the first target application identifier. The application identifier corresponding to the application that has been shared by the first electronic device to the second electronic device includes the first target application identifier, or the first target application identifier is an application identifier input in the first interface.

In an application sharing process, the first electronic device may display the first interface. The first interface includes the application identifier corresponding to the application that has been shared by the first electronic device to the second electronic device before the current connection between the first electronic device and the second electronic device. The first electronic device may share, to the second electronic device, the running interface of the first target application corresponding to the first target application identifier. The application identifier corresponding to the application that has been shared by the first electronic device to the second electronic device includes the first target application identifier, or the first target application identifier is the application identifier input in the first interface. In the sharing process in the embodiments of the present invention, the first target application identifier may be one of the application identifier corresponding to the application that has been shared by the first electronic device to the second electronic device, or an application identifier input in the first interface. In other words, the running interface of the first target application of the first electronic device can be shared with the second electronic device only by selecting the first target application identifier from the first interface and then sending the running interface of the corresponding first target application to the second electronic device, without transmitting a source file. Therefore, the sharing speed of the first target application is increased, thereby improving the sharing efficiency.

It should be understood that in this embodiment of the present invention, the radio frequency unit 1301 may be configured to receive and transmit information, or receive and transmit signals during a call. Specifically, the radio frequency unit receives downlink data from a base station, and transmits the downlink data to the processor 1310 for processing; and transmits uplink data to the base station. Generally, the radio frequency unit 1301 includes, but is not limited to, an antenna, at least one amplifier, a transceiver, a coupler, a low noise amplifier, and a duplexer. In addition, the radio frequency unit 1301 may also communicate with a network and other devices through a wireless communication system.

The electronic device provides users with wireless broadband Internet access through the network module 1302, for example, helps users receive and send e-mails, browse web pages, and access streaming media.

The audio output unit 1303 may convert audio data received by the radio frequency unit 1301 or the network module 1302 or stored in the memory 1309 into an audio signal and output the audio signal as a sound. Moreover, the audio output unit 1303 can further provide audio output related to a specific function performed the electronic device 500 (for example, call signal receiving sound and message receiving sound). The audio output unit 1303 includes a speaker, a buzzer, a telephone receiver, and the like.

The input unit 1304 is configured to receive audio or radio frequency signals. The input unit 1304 may include a graphics processing unit (Graphics Processing Unit, GPU) 13041 and a microphone 13042, and the graphics processing unit 13041 processes image data of a still picture or video obtained by an image capture electronic device (such as a camera) in a video capture mode or an image capture mode. A processed image frame may be displayed on the display unit 1306. The image frame processed by the graphics processing unit 13041 may be stored in the memory 1309 (or another storage medium) or sent by using the radio frequency unit 1301 or the network module 1302. The microphone 13042 may receive sound and can process such sound into audio data. The processed audio data can be converted into a format that can be sent to a mobile communications base station through the radio frequency unit 1301 in a telephone call mode, for outputting.

The electronic device 600 further includes at least one sensor 1305, for example, a light sensor, a motor sensor, and another sensor. Specifically, the light sensor includes an ambient light sensor and a proximity sensor. The ambient light sensor may adjust brightness of a display panel 13061 according to ambient light brightness. The proximity sensor may switch off the display panel 13061 and/or backlight when the electronic device 600 moves close to an ear. As a motion sensor, an accelerometer sensor may detect magnitude of acceleration in various directions (usually three axes), may detect magnitude and the direction of gravity when stationary, may be configured to identify electronic device postures (such as switching between a landscape mode and a portrait mode, related games, and magnetometer posture calibration), may perform functions related to vibration identification (such as a pedometer and a knock), and the like. The sensor 1305 may further include a fingerprint sensor, a pressure sensor, an iris sensor, a molecular sensor, a gyroscope, a barometer, a hygrometer, a thermometer, an infrared sensor, or the like. Details are not described herein again.

The display unit 1306 is configured to display information entered by the user or information provided for the user. The display unit 1306 may include the display panel 13061, and the display panel 13061 may be configured in a form of a liquid crystal display (Liquid Crystal Display, LCD), an organic light-emitting diode (Organic Light-Emitting Diode, OLED), or the like.

The user input unit 1307 may be configured to receive entered number or character information, and generate key signal input related to user settings and function control of the electronic device. Specifically, the user input unit 1307 includes a touch panel 13071 and another input device 13072. The touch panel 13071, also called a touch screen, may collect touch operation on or near the touch panel by users (for example, operation on the touch panel 13071 or near the touch panel 13071 by fingers or any suitable objects or accessories such as a touch pen by the users). The touch panel 13071 may include two parts: a touch detection electronic device and a touch controller. The touch detection electronic device detects a touch position of the user, detects a signal brought by the touch operation, and sends the signal to the touch controller. The touch controller receives touch information from the touch detection electronic device, converts the touch information in touch point coordinates, sends the touch point coordinates to the processor 1310, and receives and executes a command sent by the processor 1310. In addition, the touch panel 13071 may be implemented as a resistive type, a capacitive type, an infrared type, a surface acoustic wave type, or the like. In addition to the touch panel 13071, the user input unit 1307 may further include another input device 13072. Specifically, the another input device 13072 may include but are not limited to: a physical keyboard, a function key (such as a volume control key or a switch key), a trackball, a mouse, and a joystick, which is no longer repeated here.

Further, the touch panel 13071 may cover the display panel 13061. After detecting the touch operation on or near the touch panel 13071, the touch panel 13061 transmits the touch operation to the processor 1310 to determine a type of a touch event, and then the processor 1310 provides corresponding visual output on the display panel 13061 based on the type of the touch event. Although in FIG. 13, the touch panel 13071 and the display panel 13061 are configured as two independent components to implement input and output functions of the electronic device, in some embodiments, the touch panel 13071 and the display panel 13061 can be integrated to implement the input and output functions of the electronic device. Details are not limited herein.

The interface unit 1308 is an interface for connecting an external electronic device and the electronic device 500. For example, the external electronic device may include a wired or wireless headset port, an external power supply (or battery charger) port, a wired or wireless data port, a storage card port, a port configured to connect to an electronic device having an identification module, an audio input/output (I/O) port, a video I/O port, a headset port, and the like. The interface unit 1308 may be configured to receive an input (for example, data information and power) from an external apparatus and transmit the received input to one or more elements in the electronic device 500 or may be configured to transmit data between the electronic device 500 and the external apparatus.

The memory 1309 may be configured to store a software program and various data. The memory 1309 may mainly include a program storage area and a data storage area. The program storage area may store an operating system, an application required by at least one function (for example, a sound play function or an image display function), and the like. The data storage area may store data (for example, audio data or an address book) or the like created based on use of the mobile phone. In addition, the memory 1309 may include a high-speed random access memory or a nonvolatile memory, for example, at least one disk storage device, a flash memory, or other volatile solid-state storage devices.

The processor 1310 is a control center of the electronic device and connects all parts of the electronic device using various interfaces and circuits. By running or executing software programs and/or modules stored in the memory 1309 and by calling data stored in the memory 1309, the processor 1310 implements various functions of the electronic device and processes data, thereby performing overall monitoring on the electronic device. The processor 1310 may include one or more processing units. Preferably, an application processor and a modem processor may be integrated into the processor 1310. The application processor mainly processes an operating system, a user interface, an application program, and the like. The modem processor mainly processes wireless communications. It may be understood that, alternatively, the modem processor may not be integrated into the processor 1310.

The electronic device 500 may further include the power supply 1311 (such as a battery) supplying power to each component. Preferably, the power supply 1311 may be logically connected to the processor 1310 by using a power management system, so as to implement functions such as charging management, discharging management and power consumption management by using the power management system.

In addition, the electronic device 600 includes some functional modules not shown. Details are not described herein again.

An embodiment of the present invention further provides an electronic device, including a processor 1310 and a memory 1309. The memory 1309 stores a computer program capable of running on the processor 1310. When executed by the processor 1310, the computer program implements the processes in the foregoing embodiment of the application sharing method, and a same technical effect can be achieved. To avoid repetition, details are not described herein again.

An embodiment of the present invention further provides a computer-readable storage medium. The computer-readable storage medium stores a computer program. When executed by a processor, the computer program implements the processes in the foregoing embodiment of the application sharing method, and a same technical effect can be achieved. To avoid repetition, details are not described herein again. The computer-readable storage medium may be a read-only memory (Read-Only Memory, ROM), a random access memory (Random Access Memory, RAM), a magnetic disk, a compact disc, or the like.

It should be noted that, in this specification, the terms "include", "comprise", or any of their variants are intended to cover a non-exclusive inclusion, such that a process, a method, an article, or an electronic device that includes a list of elements not only includes those elements but also includes other elements that are not expressly listed, or further includes elements inherent to such process, method, article, or electronic device. An element limited by "includes a ..." does not, without more constraints, preclude the presence of additional identical elements in the process, method, article, or electronic device that includes the element.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of the present invention essentially or the part contributing to the prior art may be implemented in a form of a software product. The computer software product is stored in a storage medium (such as a ROM/RAM, a magnetic disk, or an optical disc), and includes several instructions for instructing an electronic device (which may be a mobile phone, a computer, a server, an air conditioner, a network device, or the like) to perform the method described in the embodiments of the present invention.

The technical features of the above embodiments may be arbitrarily combined. For brevity of description, all possible combinations of the technical features in the above embodiments are not described. However, as long as there is no contradiction between the combinations of these technical features, all these combinations should be considered as the scope of this specification.

The embodiments of the present invention are described above with reference to the accompanying drawings, but the present invention is not limited to the foregoing specific implementations, and the foregoing specific implementations are only illustrative and not restrictive. The invention is defined by the appended claims.

## Claims

1. An application sharing method, performed by a first electronic device the method comprising:
connecting the first electronic device to a second electronic device;
displaying (101) a first interface on a physical screen of the first electronic device when the first electronic device is connected to the second electronic device; wherein the first interface comprises a first application identifier list, wherein the first application identifier list comprises at least one application identifier each corresponding to an application that has been shared by the first electronic device to the second electronic device before current connection between the first electronic device and the second electronic device, and the first application identifier list is a list in which clickable application identifiers including the at least one application identifier are listed;
obtaining (102) a first target application identifier by a user clicking the first target application identifier in the first interface among the clickable application identifiers when the at least one application identifier each corresponding to an application that has been shared by the first electronic device to the second electronic device comprises the first target application identifier; and
sharing (103), to the second electronic device, a running interface of a first target application corresponding to the first target application identifier by sending a screen recording of the running interface displayed in a virtual screen of the first electronic device.

2. The method according to claim 1, wherein the first interface further comprises a first input box;
the obtaining (102) a first target application identifier comprises:
receiving the first target application identifier input in the first input box; and
after the obtaining (102) a first target application identifier, the method further comprises:
displaying the first target application identifier in the first interface, and hiding a first application identifier included in the at least one application identifier, wherein the first application identifier is an application identifier that is different from the first target application identifier and that is in the at least one application identifier each corresponding to the application that has been shared by the first electronic device to the second electronic device.

3. The method according to claim 1, wherein the displaying a first interface when the first electronic device is connected to the second electronic device comprises:
receiving a first input when the first electronic device is connected to the second electronic device;
displaying a second interface in response to the first input, wherein the second interface comprises a device identifier of at least one third electronic device that has been connected to the first electronic device, and the device identifier of the at least one third electronic device comprises a device identifier of the second electronic device; and
receiving a second input for the device identifier that is of the second electronic device and that is in the second interface, and displaying the first interface.

4. The method according to claim 1, further comprising:
displaying a third interface of the first electronic device when the first electronic device is connected to the second electronic device, wherein the third interface comprises the at least one application identifier each corresponding to a shared application and having been received by the first electronic device before the current connection between the first electronic device and the second electronic device;
sending, to the second electronic device, a sharing request for a second target application corresponding to a second target application identifier, wherein the at least one application identifier corresponding to the shared application and having been received by the first electronic device comprises the second target application identifier or the second target application identifier is an application identifier input in the third interface; and
receiving and displaying a running interface that is of the second target application and that is sent by the second electronic device based on the sharing request.

5. The method according to claim 4, wherein the third interface further comprises a second input box for receiving a textual input; and
the sending, to the second electronic device, a sharing request for a second target application corresponding to a second target application identifier comprises:
receiving a name of the second target application identifier input in the second input box;
displaying the second target application identifier in the third interface, and hiding a second application identifier in the application identifier corresponding to the shared application and having been received by the first electronic device, wherein the second application identifier is an application identifier that is different from the second target application identifier and that is in the application identifier corresponding to the shared application and having been received by the first electronic device; and
sending, to the second electronic device, the sharing request for the second target application corresponding to the second target application identifier.

6. A first electronic device (1200), comprising:
a first display module (1201), configured to display a first interface on a physical screen of the first electronic device when the first electronic device (1200) is connected to the second electronic device; wherein the first interface comprises a first application identifier list, wherein the first application identifier list comprises at least one application identifier each corresponding to an application that has been shared by the first electronic device to the second electronic device before current connection between the first electronic device and the second electronic device, and the first application identifier list is a list in which clickable application identifiers including the at least one application identifier are listed;
an identifier obtaining module (1202), configured to obtain a first target application identifier by a user clicking the first target application identifier in the first interface among the clickable application identifiers when the at least one application identifier each corresponding to an application that has been shared by the first electronic device to the second electronic device comprises the first target application identifier; and
a sharing module (1203), configured to share, to the second electronic device, a running interface of a first target application corresponding to the first target application identifier by sending a screen recording of the running interface displayed in a virtual screen of the first electronic device

7. The electronic device according to claim 6, wherein the first interface further comprises a first input box;
the identifier obtaining module (1202) is configured to receive the first target application identifier input in the first input box; and
the first electronic device (1200) further comprises:
a first hiding module, configured to: after the identifier obtaining module (1202) obtains the first target application identifier, display the first target application identifier in the first interface, and hide a first application identifier included in the at least one application identifier, wherein the first application identifier is an application identifier that is different from the first target application identifier and that is in the at least one application identifier each corresponding to the application that has been shared by the first electronic device (1200) to the second electronic device.

8. The electronic device according to claim 6, wherein the first display module (1201) comprises:
a first input receiving module, configured to receive a first input when the first electronic device (1200) is connected to the second electronic device;
a first displaying sub-module, configured to display a second interface in response to the first input, wherein the second interface comprises a device identifier of at least one third electronic device that has been connected to the first electronic device (1200), and the device identifier of the at least one third electronic device comprises a device identifier of the second electronic device; and
a second displaying sub-module, configured to receive a second input for the device identifier that is of the second electronic device and that is in the second interface, and display the first interface.

9. The electronic device according to claim 6, wherein the first electronic device (1200) further comprises:
a second display module, configured to display a third interface of the first electronic device when the first electronic device (1200) is connected to the second electronic device, wherein the third interface comprises the at least one application identifier each corresponding to a shared application and having been received by the first electronic device (1200) before the current connection between the first electronic device (1200) and the second electronic device;
a request sending module, configured to send, to the second electronic device, a sharing request for a second target application corresponding to a second target application identifier, wherein the at least one application identifier corresponding to the shared application and having been received by the first electronic device (1200) comprises the second target application identifier or the second target application identifier is an application identifier input in the third interface; and
an interface receiving module, configured to receive and display a running interface that is of the second target application and that is sent by the second electronic device based on the sharing request.

10. The electronic device according to claim 9, wherein the third interface further comprises a second input box for receiving a textual input; and
the request sending module comprises:
an identifier receiving module, configured to receive a name of the second target application identifier input in the second input box;
a second hiding module, configured to: display the second target application identifier in the third interface, and hide a second application identifier in the application identifier corresponding to the shared application and having been received by the first electronic device (1200), wherein the second application identifier is an application identifier that is different from the second target application identifier and that is in the application identifier corresponding to the shared application and having been received by the first electronic device (1200); and
a sharing request sending module, configured to send, to the second electronic device, the sharing request for the second target application corresponding to the second target application identifier.

11. A computer-readable storage medium, **characterized in that** the computer-readable storage medium stores a computer program, and when executing the computer program, a processor implements the steps of the application sharing method according to any one of claims 1 to 5.

12. A computer program product, **characterized in that** the computer program product is stored in a non-volatile storage medium, and when executed by at least one processor, the program product implements the steps of the application sharing method according to any one of claims 1 to 5.

## Patentansprüche

1. Anwendungsteilungsverfahren, das von einer ersten elektronischen Vorrichtung durchgeführt wird, wobei das Verfahren Folgendes umfasst:
Verbinden der ersten elektronischen Vorrichtung mit einer zweiten elektronischen Vorrichtung;
Anzeigen (101) einer ersten Schnittstelle auf einem physischen Bildschirm der ersten elektronischen Vorrichtung, wenn die erste elektronische Vorrichtung mit der zweiten elektronischen Vorrichtung verbunden ist; wobei die erste Schnittstelle eine erste Anwendungskennungsliste umfasst, wobei die erste Anwendungskennungsliste mindestens eine Anwendungskennung umfasst, die jeweils einer Anwendung entspricht, die vor der aktuellen Verbindung zwischen der ersten elektronischen Vorrichtung und der zweiten elektronischen Vorrichtung durch die erste elektronische Vorrichtung mit der zweiten elektronischen Vorrichtung geteilt wurde, und die erste Anwendungskennungsliste eine Liste ist, in der anklickbare Anwendungskennungen, die die mindestens eine Anwendungskennung einschließen, aufgeführt sind;
Erhalten (102) einer ersten Zielanwendungskennung indem ein Benutzer auf die erste Zielanwendungskennung in der ersten Schnittstelle unter den anklickbaren Anwendungskennungen klickt, wenn die mindestens eine Anwendungskennung, die jeweils einer Anwendung entspricht, die durch die erste elektronische Vorrichtung mit der zweiten elektronischen Vorrichtung geteilt wurde, die erste Zielanwendungskennung umfasst; und
Teilen (103), mit der zweiten elektronischen Vorrichtung, einer laufenden Schnittstelle einer ersten Zielanwendung, die der ersten Zielanwendungskennung entspricht, durch Senden einer Bildschirmaufzeichnung der laufenden Schnittstelle, die in einem virtuellen Bildschirm der ersten elektronischen Vorrichtung angezeigt wird.

2. Verfahren nach Anspruch 1, wobei die erste Schnittstelle ferner ein erstes Eingabefeld umfasst; das Erhalten (102) einer ersten Zielanwendungskennung umfasst:
Empfangen der ersten Zielanwendungskennung, die in das erste Eingabefeld eingegeben wurde; und
nach dem Erhalten (102) einer ersten Zielanwendungskennung umfasst das Verfahren ferner:
Anzeigen der ersten Zielanwendungskennung in der ersten Schnittstelle und Ausblenden einer ersten Anwendungskennung, die in der mindestens einen Anwendungskennung enthalten ist, wobei die erste Anwendungskennung eine Anwendungskennung ist, die sich von der ersten Zielanwendungskennung unterscheidet und die sich in der mindestens einen Anwendungskennung befindet, die jeweils der Anwendung entspricht, die durch die erste elektronische Vorrichtung mit der zweiten elektronischen Vorrichtung geteilt wurde.

3. Verfahren nach Anspruch 1, wobei das Anzeigen einer ersten Schnittstelle, wenn die erste elektronische Vorrichtung mit der zweiten elektronischen Vorrichtung verbunden ist, Folgendes umfasst:
Empfangen einer ersten Eingabe, wenn die erste elektronische Vorrichtung mit der zweiten elektronischen Vorrichtung verbunden ist;
Anzeigen einer zweiten Schnittstelle als Reaktion auf die erste Eingabe, wobei die zweite Schnittstelle eine Vorrichtungskennung mindestens einer dritten elektronischen Vorrichtung umfasst, die mit der ersten elektronischen Vorrichtung verbunden wurde, und die Vorrichtungskennung der mindestens einen dritten elektronischen Vorrichtung eine Vorrichtungskennung der zweiten elektronischen Vorrichtung umfasst; und
Empfangen einer zweiten Eingabe für die Vorrichtungskennung, die von der zweiten elektronischen Vorrichtung stammt und die sich in der zweiten Schnittstelle befindet, und Anzeigen der ersten Schnittstelle.

4. Verfahren nach Anspruch 1, ferner umfassend:
Anzeigen einer dritten Schnittstelle der ersten elektronischen Vorrichtung, wenn die erste elektronische Vorrichtung mit der zweiten elektronischen Vorrichtung verbunden ist, wobei die dritte Schnittstelle die mindestens eine Anwendungskennung umfasst, die jeweils einer geteilten Anwendung entspricht und vor der aktuellen Verbindung zwischen der ersten elektronischen Vorrichtung und der zweiten elektronischen Vorrichtung von der ersten elektronischen Vorrichtung empfangen wurde;
Senden, an die zweite elektronische Vorrichtung, einer Teilungsanforderung für eine zweite Zielanwendung, die einer zweiten Zielanwendungskennung entspricht, wobei die mindestens eine Anwendungskennung, die der geteilten Anwendung entspricht und von der ersten elektronischen Vorrichtung empfangen wurde, die zweite Zielanwendungskennung umfasst oder die zweite Zielanwendungskennung eine Anwendungskennung ist, die in die dritte Schnittstelle eingegeben wurde; und
Empfangen und Anzeigen einer laufenden Schnittstelle, die von der zweiten Zielanwendung stammt und die von der zweiten elektronischen Vorrichtung auf Grundlage der Teilungsanforderung gesendet wurde.

5. Verfahren nach Anspruch 4, wobei die dritte Schnittstelle ferner ein zweites Eingabefeld zum Empfangen einer Texteingabe umfasst; und
das Senden, an die zweite elektronische Vorrichtung, einer Teilungsanforderung für eine zweite Zielanwendung, die einer zweiten Zielanwendungskennung entspricht, umfasst:
Empfangen eines Namens der zweiten Zielanwendungskennung, die in das zweite Eingabefeld eingegeben wurde;
Anzeigen der zweiten Zielanwendungskennung in der dritten Schnittstelle und Ausblenden einer zweiten Anwendungskennung in der Anwendungskennung, die der geteilten Anwendung entspricht und von der ersten elektronischen Vorrichtung empfangen wurde, wobei die zweite Anwendungskennung eine Anwendungskennung ist, die sich von der zweiten Zielanwendungskennung unterscheidet und die sich in der Anwendungskennung befindet, die der geteilten Anwendung entspricht und von der ersten elektronischen Vorrichtung empfangen wurde; und
Senden, an die zweite elektronische Vorrichtung, der Teilungsanforderung für die zweite Zielanwendung, die der zweiten Zielanwendungskennung entspricht.

6. Erste elektronische Vorrichtung (1200), umfassend:
ein erstes Anzeigemodul (1201), das dazu konfiguriert ist, eine erste Schnittstelle auf einem physischen Bildschirm der ersten elektronischen Vorrichtung anzuzeigen, wenn die erste elektronische Vorrichtung (1200) mit der zweiten elektronischen Vorrichtung verbunden ist; wobei die erste Schnittstelle eine erste Anwendungskennungsliste umfasst, wobei die erste Anwendungskennungsliste mindestens eine Anwendungskennung umfasst, die jeweils einer Anwendung entspricht, die vor der aktuellen Verbindung zwischen der ersten elektronischen Vorrichtung und der zweiten elektronischen Vorrichtung durch die erste elektronische Vorrichtung mit der zweiten elektronischen Vorrichtung geteilt wurde, und die erste Anwendungskennungsliste eine Liste ist, in der anklickbare Anwendungskennungen, die die mindestens eine Anwendungskennung einschließen, aufgeführt sind;
ein Kennungserhaltungsmodul (1202), das dazu konfiguriert ist, eine erste Zielanwendungskennung zu erhalten, indem ein Benutzer auf die erste Zielanwendungskennung in der ersten Schnittstelle unter den anklickbaren Anwendungskennungen klickt, wenn die mindestens eine Anwendungskennung, die jeweils einer Anwendung entspricht, die durch die erste elektronische Vorrichtung mit der zweiten elektronischen Vorrichtung geteilt wurde, die erste Zielanwendungskennung umfasst; und
ein Teilungsmodul (1203), das dazu konfiguriert ist, mit der zweiten elektronischen Vorrichtung, eine laufende Schnittstelle einer ersten Zielanwendung zu teilen, die der ersten Zielanwendungskennung entspricht, durch Senden einer Bildschirmaufzeichnung der laufenden Schnittstelle, die in einem virtuellen Bildschirm der ersten elektronischen Vorrichtung angezeigt wird.

7. Elektronische Vorrichtung nach Anspruch 6, wobei die erste Schnittstelle ferner ein erstes Eingabefeld umfasst;
das Kennungserhaltungsmodul (1202) dazu konfiguriert ist, die erste Zielanwendungskennung zu empfangen, die in das erste Eingabefeld eingegeben wurde; und
die erste elektronische Vorrichtung (1200) ferner Folgendes umfasst:
ein erstes Ausblendmodul, das zu Folgendem konfiguriert ist: nachdem das Identifikatorerhaltungsmodul (1202) den ersten Zielanwendungsidentifikator erhalten hat, Anzeigen der ersten Zielanwendungskennung in der ersten Schnittstelle und Ausblenden einer ersten Anwendungskennung, die in der mindestens einen Anwendungskennung enthalten ist, wobei die erste Anwendungskennung eine Anwendungskennung ist, die sich von der ersten Zielanwendungskennung unterscheidet und die sich in der mindestens einen Anwendungskennung befindet, die jeweils der Anwendung entspricht, die durch die erste elektronische Vorrichtung (1200) mit der zweiten elektronischen Vorrichtung geteilt wurde.

8. Elektronische Vorrichtung nach Anspruch 6, wobei das erste Anzeigemodul (1201) Folgendes umfasst:
ein erstes Eingabeempfangsmodul, das dazu konfiguriert ist, eine erste Eingabe zu empfangen, wenn die erste elektronische Vorrichtung (1200) mit der zweiten elektronischen Vorrichtung verbunden ist;
ein erstes Anzeigeuntermodul, das dazu konfiguriert ist, eine zweite Schnittstelle als Reaktion auf die erste Eingabe anzuzeigen, wobei die zweite Schnittstelle eine Vorrichtungskennung mindestens einer dritten elektronischen Vorrichtung umfasst, die mit der ersten elektronischen Vorrichtung (1200) verbunden wurde, und die Vorrichtungskennung der mindestens einen dritten elektronischen Vorrichtung eine Vorrichtungskennung der zweiten elektronischen Vorrichtung umfasst; und
ein zweites Anzeigeuntermodul, das dazu konfiguriert ist, eine zweite Eingabe für die Vorrichtungskennung zu empfangen, die von der zweiten elektronischen Vorrichtung stammt und die sich in der zweiten Schnittstelle befindet, und die erste Schnittstelle anzuzeigen.

9. Elektronische Vorrichtung nach Anspruch 6, wobei die erste elektronische Vorrichtung (1200) ferner Folgendes umfasst:
ein zweites Anzeigemodul, das dazu konfiguriert ist, eine dritte Schnittstelle der ersten elektronischen Vorrichtung anzuzeigen, wenn die erste elektronische Vorrichtung (1200) mit der zweiten elektronischen Vorrichtung verbunden ist, wobei die dritte Schnittstelle die mindestens eine Anwendungskennung umfasst, die jeweils einer geteilten Anwendung entspricht und vor der aktuellen Verbindung zwischen der ersten elektronischen Vorrichtung (1200) und der zweiten elektronischen Vorrichtung von der ersten elektronischen Vorrichtung (1200) empfangen wurde;
ein Anforderungssendemodul, das dazu konfiguriert ist, an die zweite elektronische Vorrichtung, einer Teilungsanforderung für eine zweite Zielanwendung zu senden, die einer zweiten Zielanwendungskennung entspricht, wobei die mindestens eine Anwendungskennung, die der geteilten Anwendung entspricht und von der ersten elektronischen Vorrichtung (1200) empfangen wurde, die zweite Zielanwendungskennung umfasst oder die zweite Zielanwendungskennung eine Anwendungskennung ist, die in die dritte Schnittstelle eingegeben wurde; und
ein Schnittstellenempfangsmodul, das dazu konfiguriert ist, eine laufende Schnittstelle, die von der zweiten Zielanwendung stammt und die von der zweiten elektronischen Vorrichtung auf Grundlage der Teilungsanforderung gesendet wird, zu empfangen und anzuzeigen.

10. Elektronische Vorrichtung nach Anspruch 9, wobei die dritte Schnittstelle ferner ein zweites Eingabefeld zum Empfangen einer Texteingabe umfasst; und
das Anforderungssendemodul umfasst:
ein Kennungsempfangsmodul, das dazu konfiguriert ist, einen Namen der zweiten Zielanwendungskennung zu empfangen, die in das zweite Eingabefeld eingegeben wurde;
ein zweites Ausblendmodul, das zu Folgendem konfiguriert: Anzeigen der zweiten Zielanwendungskennung in der dritten Schnittstelle und Ausblenden einer zweiten Anwendungskennung in der Anwendungskennung, die der geteilten Anwendung entspricht und von der ersten elektronischen Vorrichtung (1200) empfangen wurde, wobei die zweite Anwendungskennung eine Anwendungskennung ist, die sich von der zweiten Zielanwendungskennung unterscheidet und die sich in der Anwendungskennung befindet, die der geteilten Anwendung entspricht und von der ersten elektronischen Vorrichtung (1200) empfangen wurde; und
ein Teilungsanforderungssendemodul, das dazu konfiguriert ist, an die zweite elektronische Vorrichtung, die Teilungsanforderung für die zweite Zielanwendung, die der zweiten Zielanwendungskennung entspricht, zu senden.

11. Computerlesbares Speichermedium, **dadurch gekennzeichnet, dass** das computerlesbare Speichermedium ein Computerprogramm speichert und ein Prozessor beim Ausführen des Computerprogramms die Schritte des Anwendungsteilungsverfahrens nach einem der Ansprüche 1 bis 5 implementiert.

12. Computerprogrammprodukt, **dadurch gekennzeichnet, dass** das Computerprogrammprodukt in einem nichtflüchtigen Speichermedium gespeichert ist und, wenn es von mindestens einem Prozessor ausgeführt wird, das Programmprodukt die Schritte des Anwendungsteilungsverfahrens nach einem der Ansprüche 1 bis 5 implementiert.

## Revendications

1. Procédé de partage d'application, exécuté par un premier dispositif électronique, le procédé comprenant :
connecter le premier dispositif électronique à un deuxième dispositif électronique ;
afficher (101) une première interface sur un écran physique du premier dispositif électronique lorsque le premier dispositif électronique est connecté au deuxième dispositif électronique ; dans lequel la première interface comprend une première liste d'identifiants d'application, dans lequel la première liste d'identifiants d'application comprend au moins un identifiant d'application correspondant chacun à une application qui a été partagée par le premier dispositif électronique avec le deuxième dispositif électronique avant la connexion actuelle entre le premier dispositif électronique et le deuxième dispositif électronique, et la première liste d'identifiants d'application est une liste dans laquelle les identifiants d'application cliquables, incluant l'au moins un identifiant d'application, sont répertoriés ;
obtenir (102) un premier identifiant d'application cible par un utilisateur en cliquant sur le premier identifiant d'application cible dans la première interface parmi les identifiants d'application cliquables lorsque l'au moins un identifiant d'application correspondant chacun à une application, qui a été partagée par le premier dispositif électronique avec le deuxième dispositif électronique, comprend le premier identifiant d'application cible ; et
partager (103), avec le deuxième dispositif électronique, une interface d'exécution d'une première application cible correspondant au premier identifiant d'application cible en envoyant un enregistrement d'écran de l'interface d'exécution affichée sur un écran virtuel du premier dispositif électronique.

2. Procédé selon la revendication 1, dans lequel la première interface comprend en outre une première boîte d'entrée ;
l'obtention (102) d'un premier identifiant d'application cible comprend :
recevoir l'entrée du premier identifiant d'application cible dans la première boîte d'entrée ; et
après l'obtention (102) d'un premier identifiant d'application cible, le procédé comprend en outre :
afficher le premier identifiant d'application cible dans la première interface, et masquer un premier identifiant d'application inclus dans l'au moins un identifiant d'application, dans lequel le premier identifiant d'application est un identifiant d'application qui est différent du premier identifiant d'application cible et qui est dans l'au moins un identifiant d'application correspondant chacun à l'application qui a été partagée par le premier dispositif électronique avec le deuxième dispositif électronique.

3. Procédé selon la revendication 1, dans lequel l'affichage d'une première interface lorsque le premier dispositif électronique est connecté au deuxième dispositif électronique comprend :
recevoir une première entrée lorsque le premier dispositif électronique est connecté au deuxième dispositif électronique ;
afficher une deuxième interface en réponse à la première entrée, dans lequel la deuxième interface comprend un identifiant de dispositif d'au moins un troisième dispositif électronique qui a été connecté au premier dispositif électronique, et l'identifiant de dispositif de l'au moins un troisième dispositif électronique comprend un identifiant de dispositif du deuxième dispositif électronique ; et
recevoir une seconde entrée pour l'identifiant de dispositif qui est du deuxième dispositif électronique et qui se trouve dans la deuxième interface, et afficher la première interface.

4. Procédé selon la revendication 1, comprenant en outre :
afficher une troisième interface du premier dispositif électronique lorsque le premier dispositif électronique est connecté au deuxième dispositif électronique, dans lequel la troisième interface comprend au moins un identifiant d'application correspondant chacun à une application partagée et ayant été reçu par le premier dispositif électronique avant la connexion actuelle entre le premier dispositif électronique et le deuxième dispositif électronique ;
envoyer, au deuxième dispositif électronique, une demande de partage pour une seconde application cible correspondant à un second identifiant d'application cible, dans lequel l'au moins un identifiant d'application correspondant à l'application partagée et ayant été reçu par le premier dispositif électronique comprend le second identifiant d'application cible ou l'identifiant d'application cible est un identifiant d'application entré dans la troisième interface ; et
recevoir et afficher une interface d'exécution qui est de la seconde application cible et qui est envoyée par le deuxième dispositif électronique sur la base de la demande de partage.

5. Procédé selon la revendication 4, dans lequel la troisième interface comprend en outre une seconde boîte d'entrée pour recevoir une entrée textuelle ; et l'envoi, au deuxième dispositif électronique, d'une demande de partage pour une seconde application cible correspondant à un second identifiant d'application cible comprend :
recevoir un nom du second identifiant d'application cible entré dans la seconde boîte d'entrée ;
afficher le second identifiant d'application cible dans la troisième interface, et masquer un second identifiant d'application dans l'identifiant d'application correspondant à l'application partagée et ayant été reçu par le premier dispositif électronique, dans lequel le second identifiant d'application est un identifiant d'application qui est différent du second identifiant d'application cible et qui se trouve dans l'identifiant d'application correspondant à l'application partagée et ayant été reçu par le premier dispositif électronique ; et
envoyer, au deuxième dispositif électronique, la demande de partage pour la seconde application cible correspondant au second identifiant d'application cible.

6. Premier dispositif électronique (1200), comprenant :
un premier module d'affichage (1201), configuré pour afficher une première interface sur un écran physique du premier dispositif électronique lorsque le premier dispositif électronique (1200) est connecté au deuxième dispositif électronique ; dans lequel la première interface comprend une première liste d'identifiants d'application, dans lequel la première liste d'identifiants d'application comprend au moins un identifiant d'application correspondant chacun à une application qui a été partagée par le premier dispositif électronique avec le deuxième dispositif électronique avant la connexion actuelle entre le premier dispositif électronique et le deuxième dispositif électronique, et la première liste d'identifiants d'application est une liste dans laquelle les identifiants d'application cliquables, comprenant l'au moins un identifiant d'application, sont répertoriés ;
un module d'obtention d'identifiant (1202), configuré pour obtenir un premier identifiant d'application cible par un utilisateur en cliquant sur le premier identifiant d'application cible dans la première interface parmi les identifiants d'application cliquables lorsque l'au moins un identifiant d'application correspondant chacun à une application, qui a été partagée par le premier dispositif électronique avec le deuxième dispositif électronique, comprend le premier identifiant d'application cible ; et
un module de partage (1203), configuré pour partager, avec le deuxième dispositif électronique, une interface d'exécution d'une première application cible correspondant au premier identifiant d'application cible en envoyant un enregistrement d'écran de l'interface d'exécution affichée sur un écran virtuel du premier dispositif électronique.

7. Dispositif électronique selon la revendication 6, dans lequel la première interface comprend en outre une première boîte d'entrée ;
le module d'obtention d'identifiant (1202) est configuré pour recevoir le premier identifiant d'application cible entré dans la première boîte d'entrée ; et
le premier dispositif électronique (1200) comprend en outre :
un premier module de masquage, configuré pour : après que le module d'obtention d'identifiant (1202) a obtenu le premier identifiant d'application cible, afficher le premier identifiant d'application cible dans la première interface, et masquer un premier identifiant d'application inclus dans l'au moins un identifiant d'application, dans lequel le premier identifiant d'application est un identifiant d'application qui est différent du premier identifiant d'application cible et qui est dans l'au moins un identifiant d'application correspondant chacun à l'application qui a été partagée par le premier dispositif électronique (1200) avec le deuxième dispositif électronique.

8. Dispositif électronique selon la revendication 6, dans lequel le premier module d'affichage (1201) comprend :
un premier module de réception d'entrée, configuré pour recevoir une première entrée lorsque le premier dispositif électronique (1200) est connecté au deuxième dispositif électronique ;
un premier sous-module d'affichage, configuré pour afficher une deuxième interface en réponse à la première entrée, dans lequel la deuxième interface comprend un identifiant de dispositif d'au moins un troisième dispositif électronique qui a été connecté au premier dispositif électronique (1200), et l'identifiant de dispositif de l'au moins un troisième dispositif électronique comprend un identifiant de dispositif du deuxième dispositif électronique ; et
un second sous-module d'affichage, configuré pour recevoir une seconde entrée pour l'identifiant de dispositif qui est du deuxième dispositif électronique et qui se trouve dans la deuxième interface, et afficher la première interface.

9. Dispositif électronique selon la revendication 6, dans lequel le premier dispositif électronique (1200) comprend en outre :
un second module d'affichage, configuré pour afficher une troisième interface du premier dispositif électronique lorsque le premier dispositif électronique (1200) est connecté au deuxième dispositif électronique, dans lequel la troisième interface comprend l'au moins un identifiant d'application correspondant chacun à une application partagée et ayant été reçu par le premier dispositif électronique (1200) avant la connexion actuelle entre le premier dispositif électronique (1200) et le deuxième dispositif électronique ;
un module d'envoi de requête, configuré pour envoyer, au deuxième dispositif électronique, une demande de partage pour une seconde application cible correspondant à un second identifiant d'application cible, dans lequel l'au moins un identifiant d'application correspondant à l'application partagée et ayant été reçu par le premier dispositif électronique (1200) comprend le second identifiant d'application cible ou l'identifiant d'application cible est un identifiant d'application entré dans la troisième interface ; et
un module de réception d'interface, configuré pour recevoir et afficher une interface d'exécution qui est de la seconde application cible envoyée par le deuxième dispositif électronique sur la base de la demande de partage.

10. Dispositif électronique selon la revendication 9, dans lequel la troisième interface comprend en outre une seconde boîte d'entrée pour recevoir une entrée textuelle ; et
le module d'envoi de requête comprend :
un module de réception d'identifiant, configuré pour recevoir un nom du second identifiant d'application cible entré dans la seconde boîte d'entrée ;
un deuxième module de masquage, configuré pour :
afficher le second identifiant d'application cible dans la troisième interface, et masquer un second identifiant d'application dans l'identifiant d'application correspondant à l'application partagée et ayant été reçu par le premier dispositif électronique (1200), dans lequel le second identifiant d'application est un identifiant d'application qui est différent du second identifiant d'application cible et qui se trouve dans l'identifiant d'application correspondant à l'application partagée et ayant été reçu par le premier dispositif électronique (1200) ; et
un module d'envoi de demande de partage, configuré pour envoyer, au deuxième dispositif électronique, la demande de partage pour la seconde application cible correspondant au second identifiant d'application cible.

11. Support de stockage lisible par ordinateur, **caractérisé en ce que** le support de stockage lisible par ordinateur stocke un programme informatique, et lors de l'exécution du programme informatique, un processeur met en œuvre les étapes du procédé de partage d'application selon l'une quelconque des revendications 1 à 5.

12. Produit de programme informatique, **caractérisé en ce que** le produit de programme informatique est stocké dans un support de stockage non volatile, et lorsqu'il est exécuté par au moins un processeur, le produit de programme met en œuvre les étapes du procédé de partage d'application selon l'une quelconque des revendications 1 à 5.
